# EUROPEAN PATENT SPECIFICATION

(11) **EP 2 644 492 B1**
(45) Date of publication and mention of the grant of the patent: **27.04.2016**
(21) Application number: 13160138.7
(22) Date of filing: 20.03.2013
(51) Int. Cl.: B62M 6/45

(54) **Motor assisted bicycle**
Fahrrad mit Hilfsmotor
Vélo assisté par un moteur

(30) Priority: 30.03.2012 JP 2012081245
(43) Date of publication of application: 02.10.2013
(73) Proprietor: Honda Motor Co., Ltd., Tokyo 107-8556 (JP)
(72) Inventor: Shinagawa, Masataka, Saitama, 351-0193 (JP); Onozawa, Seiji, Saitama, 351-0193 (JP); Moriya, Tsuyoshi, Saitama, 351-0193 (JP); Kashiwai, Mikio, Saitama, 351-0193 (JP)
(74) Representative: Weickmann & Weickmann PartmbB

(56) References cited:
- EP-A1- 0 569 954
- EP-A1- 1 295 785
- EP-A1- 1 967 446
- WO-A1-2004/016173
- WO-A1-2006/029514
- JP-A- H11 278 361
- JP-B2- 3 276 420
- US-A1- 2011 254 673

## Description

### Technical Field

The present invention relates to a motor assisted bicycle provided with a motor which assists a drive force generated by a stepping force which, in turn, is generated when a person steps in a pedal, and more particularly to a motor assisted bicycle where a drive force is efficiently assisted by a motor by taking into account the degree of fatigue of a rider.

### Background Art

A motor assisted bicycle is constituted of a stepping force sensor which detects a stepping force generated on a pedal, a motor which assists a drive force corresponding to an output of the stepping force sensor, a crank angle sensor which detects an angle of a crankshaft to which a pedal is connected, and a crank rotational speed sensor which detects a rotational speed of the crankshaft.

As a motor assisted bicycle which assists a drive force by taking into account not only a stepping force but also the degree of fatigue so as to prevent a motor assist force from becoming excessively large when a rider with the small degree of fatigue rides on a bicycle, as disclosed in Japanese Patent 3276420, there has been proposed the constitution where a change in a heart rate and a breathing rate of a rider during traveling is measured, a measured value is outputted as a human body index, and an assist torque of a motor with respect to a stepping force is set based on the human body index. The mentioned JP-B-3 276420, and EP-A-1 295 785 disclose the features of the preamble of claim 1.

### Summary of the Invention

### Problems that the Invention is to solve

Due to the above-mentioned constitution, a drive force assist ratio is changed based on the human body index calculated using a heart rate or a breathing rate of the rider and hence, the drive force assist ratio becomes equal provided that the human body index is equal and hence, the assist quantity also becomes equal.

However, for example, when the human body index is decided using only a heart rate, even when the human body index is equal because the heart rate is equal, the degree of fatigue which the rider feels differs due to the difference in an operation state such as an operation continuation time and hence, there arises a drawback that there may be a case where an assist amount does not conform to what the rider feels.

The present invention has been made in view of the above-mentioned circumstances, and it is an object of the present invention to provide a motor assisted bicycle which can perform an assist by a motor efficiently by setting an assist amount based on actually measured fatigue information while estimating the degree of fatigue which a rider feels.

### Means for solving the problem

The above-mentioned object, is solved by the bicycle defined in claim 1. Claims 2-8 defined further preferred embodiments.

### Advantage of the Invention

According to the motor assisted bicycle described in claim 1, the assist amount control part (10) includes the basic assist amount setting part (11) and the fatigue level estimation part (12). Accordingly, the increase/decrease correction is applied to an assist amount by estimating the degree of fatigue with respect to a basic assist amount which is set by calculation and hence, it is possible to efficiently impart an assist amount which does not make a rider feel discomfort to a motor.

As a result, the motor can be efficiently driven so that the motor assisted bicycle can secure a stable traveling distance per one charge.

### Brief Description of the Drawings

Fig. 1: An explanatory side view of a motor assisted bicycle.
Fig. 2: A model view for explaining a phase of a crankshaft.
Fig. 3: A block diagram showing an assist drive force control device of the motor assisted bicycle.
Fig. 4: A block diagram showing a drive force assist amount setting means which constitutes the assist drive force control device.
Fig. 5: A flowchart for explaining steps of setting an assist amount by the drive force assist amount setting means.
Fig. 6: A flowchart for explaining another example of steps of setting the assist amount by the drive force assist amount setting means.
Fig. 7: A flowchart for explaining steps of estimating the degree of fatigue.
Fig. 8: A flowchart for explaining steps of confirming the recovery of a physical strength.
Fig. 9: A flowchart for explaining steps of confirming histories of stopping and restarting.
Fig. 10: A flowchart for explaining another example of steps of estimating the degree of fatigue.
Fig. 11: A graph showing the general relationship between a ratio of a sustaining-system muscle working amount and a ratio of an instantaneous-system muscle working amount with respect to a period of time within which an output is generated by a rider, wherein a determination threshold value is shown in the graph.
Fig. 12: A graph showing the general relationship between a ratio of a sustaining-system muscle working amount and a ratio of an instantaneous-system muscle working amount with respect to a period of time within which an output is generated by a rider, wherein a biased threshold value is shown in the graph.

### Mode for carrying out the Invention

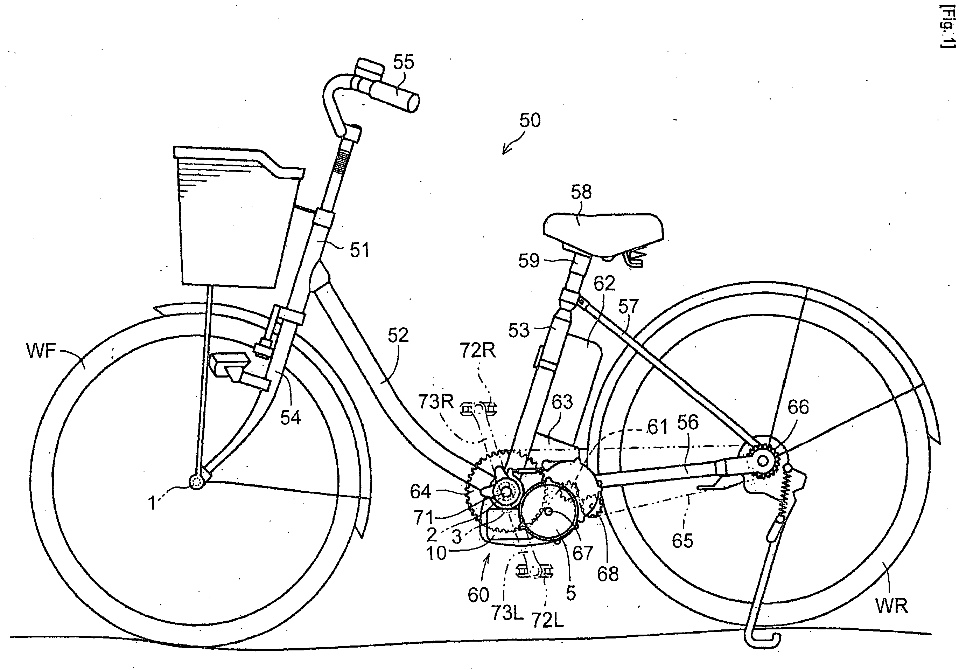

One example of a motor assisted bicycle according to the embodiment of the present invention is explained in conjunction with drawings. Fig. 1 is a side view of the motor assisted bicycle provided with an assist drive force control device which constitutes the technical feature of the present invention. The assist drive force control device efficiently assists a drive force using a motor by deciding an assist amount by estimating the degree of fatigue of a rider.

The motor assisted bicycle 50 includes: a head pipe 51 positioned on a front side of a vehicle body; a down frame 52 which extends rearwardly and downwardly from the head pipe 51; and a seat pipe 53 which is raised upwardly from a rear end of the down frame 52. A front fork 54 which extends downwardly is steerably connected to the head pipe 51, and a front wheel WF is pivotally supported on a lower end of the front fork 54. A vehicle speed sensor 1 for detecting a vehicle speed of the motor assisted bicycle 50 is arranged on the front wheel WF. A handle 55 is mounted on an upper side of the head pipe 51.

A rear fork 56 which extends rearwardly is arranged on a rear end of the down frame 52, and a rear wheel WR is pivotally supported on a rear end of the rear fork 56. A pair of left and right stays 57 is arranged between an upper portion of the seat pipe 53 and a rear portion of the rear fork 56.

An assist drive unit 61 is supported on the down frame 52 and the rear fork 56. A seat post 59 having a seat 58 on an upper end thereof is mounted on the seat pipe 53 in a state where a vertical position of the seat 58 is adjustable. Behind the seat pipe 53, a battery 62 which supplies electricity to an assist drive unit 60 is detachably mounted on a stay 63 of the seat pipe 53.

A crankshaft 71 is mounted in such a manner that the crankshaft 71 penetrates the assist drive unit 60 and a sprocket (output portion) 64 and extends in the widthwise direction of a vehicle body. A crank 73L having a pedal 72L and a crank 73R having a pedal 72R are connected to both sides of the crankshaft 71. When a rider steps in the pedals 72L, 72R, a rotational torque (power) is imparted to the crankshaft 71. The sprocket 64 is rotated due to a rotational torque imparted to the crankshaft 71. The rotation of the sprocket 64 is transmitted to a sprocket 66 on a rear wheel WR side by way of a chain 65 so that the rear wheel WR is rotated.

A stepping force sensor (magnetostrictive torque sensor) 2 which detects a rotational torque value f imparted to the crankshaft 71 is arranged on a crankshaft 71. The stepping force sensor 2 detects a rotational torque value f of the crankshaft 71 at a predetermined cycle.

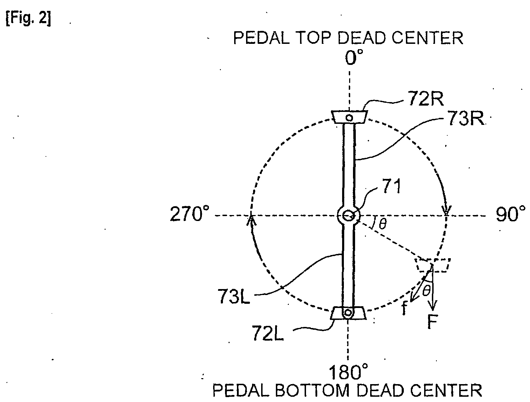

A pedal stepping force (rotational torque value f) imparted to the crankshaft 71 by a rider is, as shown in Fig. 2, is a component force in the rotational direction of a stepping force F generated when the rider steps in the pedal 72, and differs from the stepping force (stepping force effective value) F which the rider actually imparts to the pedal. The rotational torque value f and the stepping force F can be expressed by the relationship formula that rotational torque value f = stepping force F × cos_{θ}. In stepping in the pedals 72L, 72R, the rider steps in the pedals 72L, 72R in the vertical direction and hence, the direction of the stepping force F becomes the vertical direction.

Further, a crank angle sensor 3 which detects a crank angle of a crank 73 connected to the crankshaft 71 is mounted in the vicinity of the crankshaft 71.

The assist drive unit 60 is configured such that a motor 5, a motor drive circuit (driver) which drives the motor 5, an assist amount control part 10 which performs a control of the motor drive circuit based on a rotational torque value f detected by the stepping force sensor 2, and an assist sprocket 61 which is rotated upon transmission of a drive force from a motor drive shaft 67 of the motor 5 are integrally held in the inside of a case. By mounting the chain 65 on the assist sprocket 61, the assist drive unit 60 transmits the drive force of the motor 5 to the above-mentioned drive-system mechanism.

The assist amount control part 10 controls the motor drive circuit (performs an assist control) such that the motor 5 generates an assist torque (assist force) which is calculated based on a rotational torque value f detected by the stepping force sensor 2.

The assist torque (assist force) is decided corresponding to an output of the stepping force sensor 2. In this case, a basic assist amount which corresponds to an operation state of a rider is set by calculation based on a stepping force and a vehicle speed, and a fatigue level of the rider is estimated, and a control is made such that the basic assist amount is subjected to the increase/decrease correction. The detail of steps of calculating an assist torque by the calculation of a basic assist amount and the estimation of fatigue level is described later.

An assist torque generated by the motor 5 is transmitted to the chain 65 by way of the assist sprocket 61. Accordingly, when a rider steps in the pedals 72L, 72R, a rotational torque value f (drive force) imparted to the crankshaft 71 and the assist torque generated by the motor 5 are transmitted to the sprocket 66 on a rear wheel side by way of the chain 65 so that the rear wheel WR is rotated. An idler 68 which is provided for enlarging a winding angle of the chain 65 is provided behind the assist sprocket 61.

The assist drive unit 60 also has a mechanism where the sprocket 64 is rotated when the pedals 72L, 72R are stepped in the direction that the motor assisted bicycle 50 advances (normal direction), and the sprocket 64 is not rotated when the pedals 72L, 72R are stepped in the direction opposite to the normal direction.

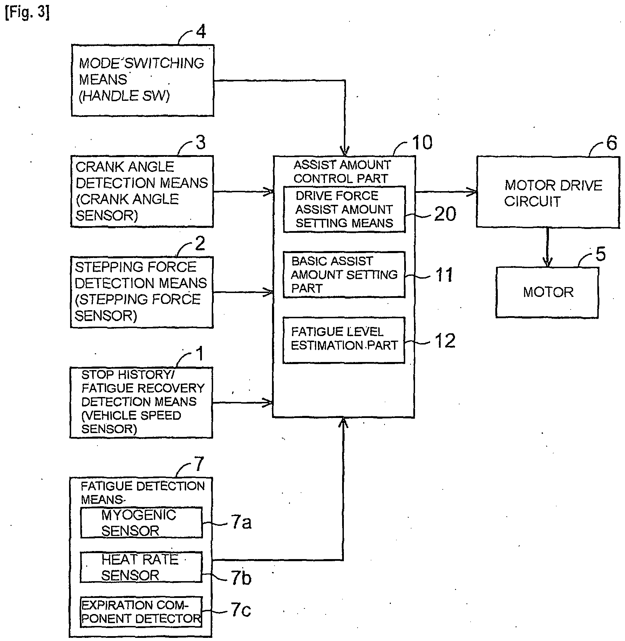

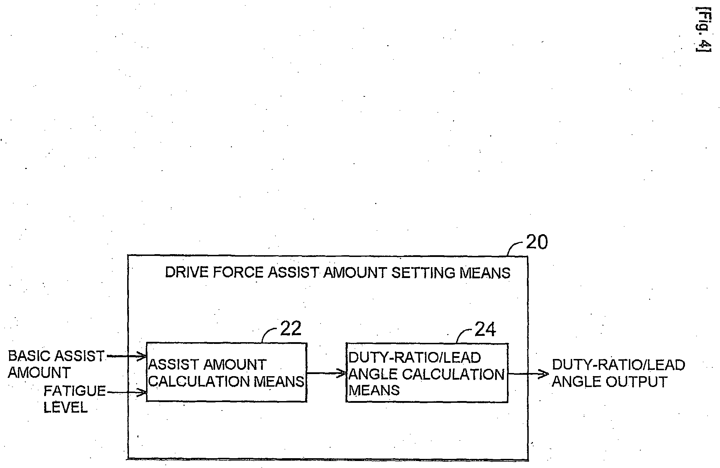

Next, the assist drive force control device of the motor assisted bicycle is explained in conjunction with block diagrams shown in Fig. 3 and Fig. 4.

As shown in Fig. 3, the assist drive force control device includes: a stop history/fatigue recovery detection means 1 having the vehicle speed sensor; a stepping force detection means 2 which includes the stepping force sensor and detects a stepping force (rotational torque value) generated on the pedal; a crank angle detection means 3 which includes the crank angle sensor for detecting an angle of the crankshaft to which the pedal is connected; a fatigue detection means 7 which detects a fatigue of a rider; the motor 5 which assists a drive force; the assist amount control part 10 which controls an assist amount imparted to the drive force; and the motor drive circuit 6 which performs driving of the motor 5 based on a drive signal from the assist amount control part 10.

Further, the assist drive force control device includes a mode switching means 4 which is a handle switch for selecting a power mode which decreases a chance of assist where the degree of fatigue is taken into account, a normal mode, or an economy mode where electricity is saved by increasing chances of assist by taking into account the degree of fatigue.

The stop history/fatigue recovery detection means 1 calculates a vehicle speed with inputting of a signal from the vehicle speed sensor for every fixed period, and calculates a change in vehicle speed for every fixed time. Then, the stop history/fatigue recovery detection means 1 acquires information for recovering fatigue by calculating stop history based on a vehicle speed and a vehicle speed change amount and stores the information, and outputs the information to the assist amount control part 10. The information for recovering fatigue is, for example, an operation continuation time, an operation stop time or the like which is calculated based on the number of times of stop histories or a time of stop history, and a value which is obtained by inputting such a value into a predetermined calculation formula is set as the degree of fatigue recovery.

The stepping force detection means 2 detects a stepping force effective value which is a force acting downwardly in the vertical direction (a stepping force which a rider actually imparts to the pedal 72) F by estimation and detected from a pedal stepping force during traveling detected by the stepping force sensor (a rotational torque value f acting in the direction perpendicular to the crankshaft), and the stepping force detection means 2 outputs the stepping force effective value F to the assist amount control part 10.

The crank angle detection means 3 detects a crank angle from the crank angle sensor, and also calculates a crank rotational speed and a change amount in crank rotational speed, and outputs these values to the assist amount control part 10.

The handle switch 4 is provided for selecting a power mode, a normal mode or an economy mode by switching. Depending on the selected mode, a threshold value relating to a pedal stepping force value for determining whether or not an assist by the motor 5 is to be performed by taking into account the degree of fatigue is changed. That is, in the power mode, the threshold value of the pedal stepping force value is set low so that chances of assist which takes into account the degree of fatigue is decreased. In the economy mode, the threshold value of the pedal stepping force value is set high so that chances of assist which takes into account the degree of fatigue is increased whereby an efficient assist amount is set thus decreasing power consumption. In the normal mode, a threshold value of the pedal stepping force value is set substantially at the center between the threshold value set for the power mode and the threshold value set for the economy mode.

The fatigue detection means 7 is constituted of fatigue detection sensors which can detect a fatigue state of a rider such as a myogenic sensor 7a which detects a muscle state in the form of an electric signal, a heat rate sensor 7b which detects the number of heart beats and an expiration component detector 7c. These fatigue detection sensors are formed of a band which can be wrapped around a hand, a leg or the like of a rider so that a fatigue state can be detected in a state where the rider wears the fatigue detection means 7.

The assist amount control part 10 includes: a drive force assist amount setting means 20 which sets a drive force assist amount based on a vehicle speed and a change amount in vehicle speed acquired from the stop history/fatigue recovery detection means 1, a rotational torque value and a stepping force effective value acquired from the stepping force detection means 2, and a crank angle acquired from the crank angle detection means 3; a basic assist amount setting part 11 which calculates a basic assist amount which becomes the reference in calculating a drive force assist amount; and a fatigue level estimation part 12 which performs the increase/decrease correction of the basic assist amount by estimating the degree of fatigue based on the degree of fatigue recovery detected by the stop history/fatigue recovery detection means 1 and a fatigue state detected by various sensors of the fatigue detection means 7.

In the basic assist amount setting part 11, the basic assist amount which becomes a reference value for setting a drive force assist amount is set based on a stepping force acquired from the stepping force detection means 2 and a vehicle speed acquired from the stop history/fatigue recovery detection means (vehicle speed sensor) 1. For example, a calculation formula of a basic assist amount where a stepping force and a vehicle speed are used as variables is preliminarily stored, and the basic assist amount is acquired by putting the stepping force and the vehicle speed into the calculation formula. The calculation formula of the basic assist amount is basically set such that the larger a stepping force in a low vehicle speed state, the larger a value of the acquired basic assist amount becomes.

Further, the basic assist amount is corrected based on the fatigue level estimated by the fatigue level estimation part 12 described later.

The fatigue level estimated by the fatigue level estimation part 12 is estimated such that, for example, a stepping force in a motor assisted bicycle or a measured time which is a time from starting the measurement of a vehicle speed is detected by a detection means, and the fatigue level is estimated based on this data, the stepping force and a vehicle speed. Further, the fatigue level may be estimated by taking into account data acquired from the myogenic sensor 7a, the heat rate sensor 7b and the expiration component detector 7c which a rider wears. The myogenic sensor 7a detects a fatigue state of muscles of the rider, the heat rate sensor 7b detects the number of heart beats of the rider, and the expiration component detector 7c detects a rate of CO₂ (expiration component) in the expiration of the rider. An instantaneous-system fatigue-time state or a sustaining-system fatigue-time state can be detected based on the acquired data.

Further, the fatigue level estimation part 12 calculates an operation continuation time based on history of a stepping force or history of a vehicle speed, and when the operation continuation time is a predetermined time or less, it is determined that a momentum is small so that it is estimated that the fatigue level is zero.

The fatigue level estimation part 12 detects the number of times the vehicle is stopped or restarted based on history of a stepping force or history of a vehicle speed, and reflects the detected data on the fatigue level. That is, along with the increase of the number of times the vehicle is restarted, a value of the fatigue level is increased.

The fatigue level estimation part 12 estimates the fatigue recovery based on the vehicle stop time which is, in turn, detected based on history of a stepping force or history of a vehicle speed, and reflects the fatigue recovery on the fatigue level. For example, when the continuous vehicle stop time becomes a predetermined value or more, it is determined that a rider has recovered from the fatigue so that a control of decreasing a value of fatigue level is performed.

The drive force assist amount setting means 20 includes: an assist amount calculation means 22 which calculates a drive assist amount upon inputting of a basic assist amount set by the basic assist amount setting part 11 and a fatigue level estimated by the fatigue level estimation part 12; and a duty-ratio/lead angle calculation means 24 which calculates a duty ratio and a lead angle of a current value corresponding to the calculated drive force assist amount (Fig. 4). The drive force assist amount setting means 20 is constituted of a CPU, for example, and the above-mentioned respective means are executed by a preset program or a hardware circuit.

The assist amount calculation means 22 calculates a value which is obtained by multiplying a basic assist amount set by the basic assist amount setting part 11 by the fatigue level estimated by the fatigue level estimation part 12 (assist increase coefficient = degree of fatigue (%)× coefficient) as an assist amount.

The duty ratio/lead angle calculation means 24 calculates command values of a duty ratio and a lead angle of a drive pulse, and outputs the command values to the motor drive circuit 6 as a duty ratio/lead angle output.

In the motor drive circuit 6, a torque control is performed corresponding to a command value output of a duty ratio/lead angle so that the motor 5 is driven. The motor drive circuit 6 includes respective switching elements of plural phases (three phases consisting of UVW), and the assist control part 10 controls the motor drive circuit 6 by performing an ON/OFF control of the respective switching elements of U,V,W phases at predetermined duty ratios. Due to such a control, the motor drive circuit 6 converts DC power of the battery 62 into 3-phase AC power, and a 3-phase AC current is supplied to a stator coil of a U phase, a stator coil of a V phase and a stator coil of a W phase in the motor 5 thus rotating the motor drive shaft 67 of the motor 5.

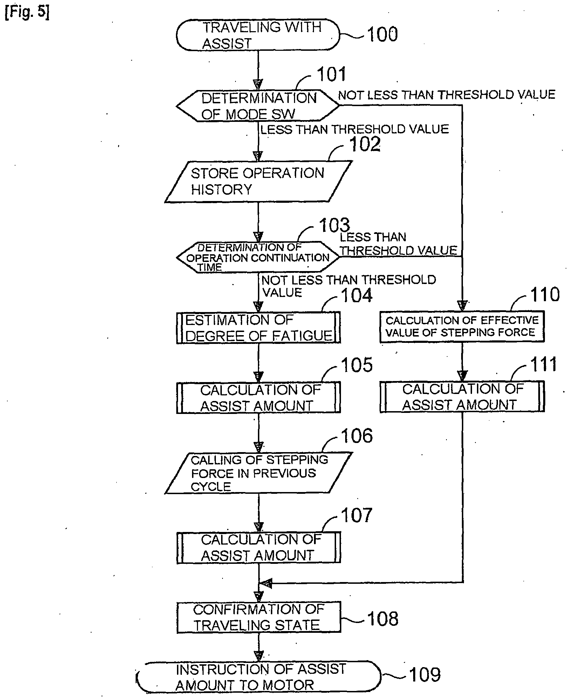

Subsequently, steps of setting a drive force assist amount by the drive force assist amount setting means 20 are explained in conjunction with Fig. 5.

During traveling of a motor assisted bicycle, when an assist traveling mode is selected (step 100), firstly, it is determined whether a mode of the handle switch 4 is any one of a power mode, a normal mode and an economy mode, and a threshold value (pedal stepping force value) corresponding to the selected mode and a stepping force value (pedal stepping force value) calculated by the stepping force detection means 2 are compared to each other (step 101).

In this step, it is determined whether or not an assist which takes into account the degree of fatigue is performed, and a threshold value relating to a pedal stepping force value is set to be increased in order of a power mode, a normal mode and an economy mode. The threshold value is set such that the higher the threshold value becomes, the larger the number of chances where the degree of fatigue is taken into account becomes so that an efficient assist amount is set thus decreasing the power consumption.

When the stepping force value (pedal stepping force value) is a threshold value or more, the determination is made that it is unnecessary to take into account the degree of fatigue in calculating an assist amount so that an assist control in a normal mode (normal assist control) is performed.

In the normal assist control, a stepping force is calculated (step 110), an assist amount proportional to the stepping force is calculated by a stepping force proportional control (step 111), and a drive force (modified torque value) is imparted with a torque peak value proportional to the stepping force.

Further, in the normal assist control, an assist amount may be calculated by a vehicle speed proportional control in place of the stepping force proportional control.

On the other hand, when the stepping force value (pedal stepping force value) is less than the threshold value, an operation history such as an operation continuation time and the number of times the vehicle is stopped or restarted or the like which is detected by the stop history/fatigue recovery detection means (vehicle speed sensor) 1 is stored (step 102).

Next, the operation continuation time which is the operation history and a threshold value which is a preset time are compared to each other (step 103). The threshold value (time) is set to a period of time which a person in general feels fatigue when he rides a bicycle and steps in pedals at an average speed continuously, for example.

When the operation continuation time is less than the threshold value, it is determined that the rider does not feel fatigue, and an assist control in a normal time is performed (steps 110, 111).

When the operation continuation time is the threshold value or more, it is determined that the rider feels fatigue so that the estimation of the degree of fatigue is performed (step 104). The detailed steps of the estimation of the degree of fatigue in step 104 are explained later.

Next, the drive assist amount is calculated based on the basic assist amount set by the basic assist amount setting part 11 and the degree of fatigue (step 105).

A pedal stepping force (rotational torque value) of the previous cycle is called (step 106), and the recalculation of a drive assist amount which takes into amount the stepping force of the previous cycle is performed (step 107).

In performing motor driving with the drive assist amount, the confirmation of a traveling state where it is determined whether or not the assist amount is appropriate for a vehicle speed is performed (step 108) and the assist amount is supplied to the motor 5 as a command via the motor drive circuit 6 so that the motor 5 is driven. In the confirmation of a traveling state, for example, it is determined whether or not a traveling state corresponds to unique setting of not performing an assist when a vehicle speed is a fixed vehicle speed or more (whether or not an assist amount is appropriate for a vehicle speed) or the like.

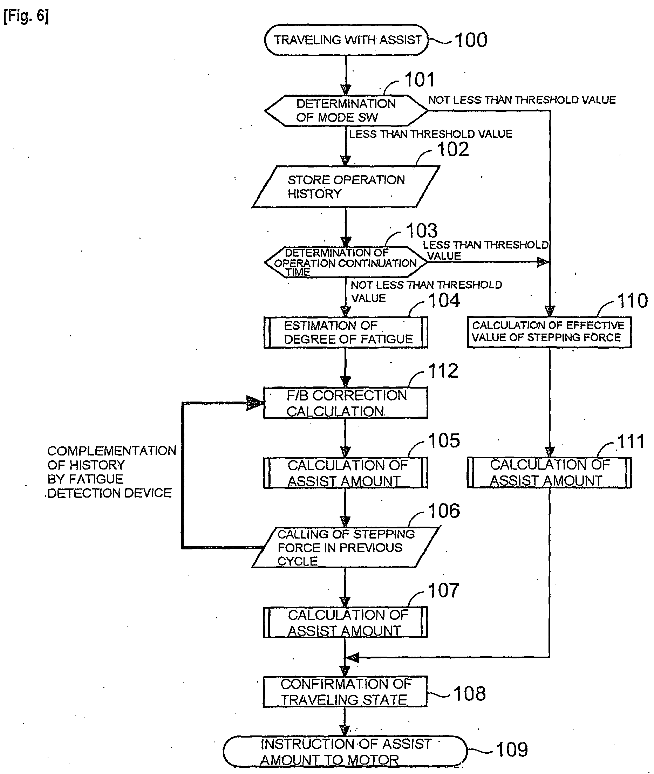

Fig. 6 shows another steps when a drive force assist amount is set by the drive force assist amount setting means 20. Steps equal to the steps in Fig. 5 are given the same symbols.

According to this example, complementing of the history by the fatigue detection device is performed after the calculation of an assist amount executed in step 105 and hence, an assist amount is calculated by performing correction calculation processing where a stepping force which is generated in the previous cycle on a rotating pedal is fed back (step 112) (step 105).

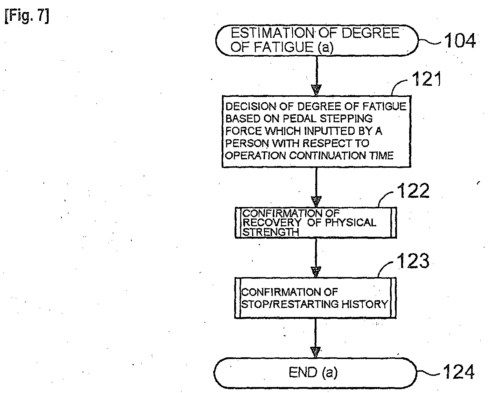

Next, the detailed steps of the estimation of the degree of fatigue (estimation of degree of fatigue (a)) in step 104 is explained in conjunction with Fig. 7.

In performing the estimation of the degree of fatigue (step 104), the degree of fatigue is decided based on a value of pedal stepping force which a rider inputs with respect to an operation continuation time (step 121). For example, when the transition of an average value of an average pedal stepping force of a person in general with respect to an operation time is prepared as a graph, magnitude of the degree of fatigue is decided by comparing an actually inputted pedal stepping force and the average value to each other.

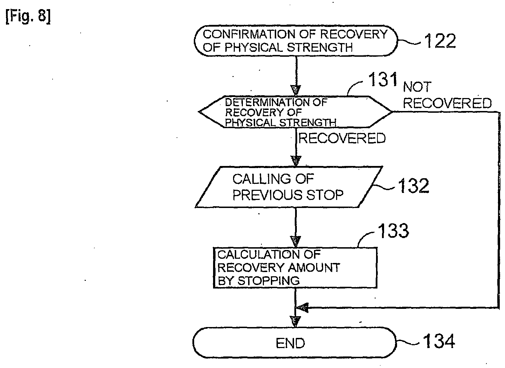

It is confirmed whether or not physical strength of the rider has recovered after deciding the degree of fatigue (step 122). The confirmation of the recovery of physical strength is performed in accordance with steps shown in Fig. 8.

Firstly, a physical strength recovery state is determined (step 131). The determination of the physical strength recovery state is executed by analyzing data acquired from various sensors of the fatigue detection means 7.

When it is determined that the recovery of physical strength is "present", the previous stop time detected and stored by the stop history/fatigue recovery detection means 1 is called (step 132).

An amount of recovery by stop is calculated based on a length of the called stop time (step 133), and the physical strength recovery confirmation processing is finished (step 134).

When it is determined that the recovery of the physical strength is "not present" in step 151, the physical strength recovery confirmation processing is finished directly (step 134).

The confirmation of stop/restarting history is performed after confirming the recovery of the physical strength (step 123).

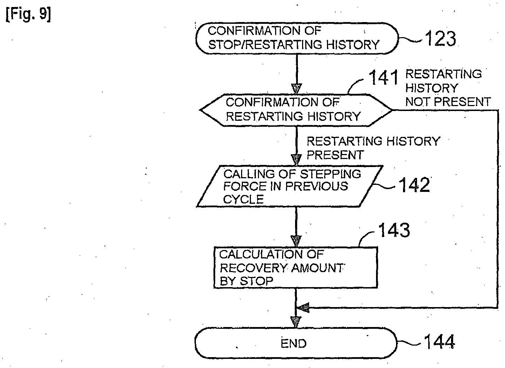

The confirmation of stop/restarting history is performed in accordance with steps shown in Fig. 9.

Firstly, the presence or the non-presence of restarting history is confirmed (step 141). Restarting history is determined based on data detected by the stop history/fatigue recovery detection means 1.

When the restarting history is present, a stepping force of the previous cycle detected and stored by the stepping force detection means 2 is called (step 142).

An amount of recovery of physical strength is calculated based on a length of stop time (step 143), and the stop/restarting history confirmation processing is finished (step 144).

When the restarting history is not present in step 141, the stop/restarting history confirmation processing is finished directly (step 144).

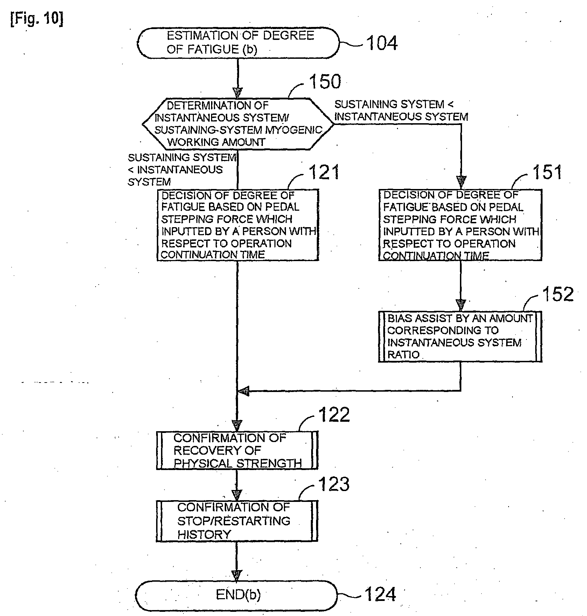

Fig. 10 shows steps (estimation (b) of the degree of fatigue) which differ from the steps shown in Fig. 7 with respect to the estimation of the degree of fatigue in step 104 shown in Fig. 6. That is, when the degree of fatigue is divided into a sustaining-system degree of fatigue and the instantaneous-system degree of fatigue, the fatigue level is estimated by taking into account a proportion of the instantaneous-system ratio.

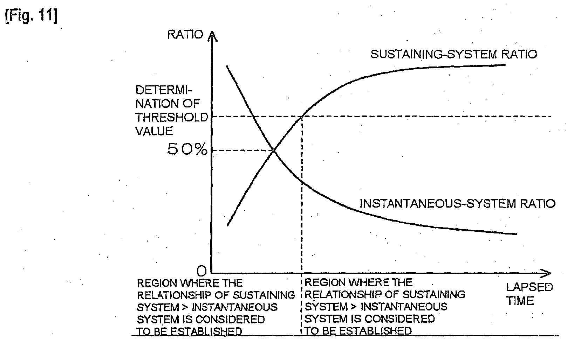

In estimating the degree of fatigue, firstly, a sustaining-system muscle working amount and an instantaneous-system muscle working amount are determined (step 150). This determination is made by the estimation which is performed using a pre-registered graph which indicates the general relationship between a sustaining-system ratio and an instantaneous-system ratio of a rider with respect to an output lapsed time (see Fig. 11). The longer the output lapsed time, the larger a sustaining-system ratio of a muscle working amount becomes, while the longer the output lapsed time, the smaller an instantaneous-system ratio of muscle working amount becomes. In this example, with respect to the sustaining-system ratio of muscle working amount, by setting a ratio in the vicinity of 60 to 70% as a threshold value for determination, it is considered that the relationship of sustaining-system < instantaneous-system is established when the sustaining-system ratio is lower than such a value, and the estimation of the fatigue level which takes into account the proportion of the instantaneous-system ratio is performed.

When it is estimated that the sustaining-system ratio is larger than the determination threshold value based on the output lapsed time, in the same manner as the step 121 shown in Fig. 7, the degree of fatigue is decided based on a value of a pedal stepping force which a rider inputs with respect to an operation continuation time (step 121). That is, when the transition of an average value of an average pedal stepping force of a person in general with respect to an operation time is prepared as a graph, magnitude of the degree of fatigue is decided by comparing an actually inputted pedal stepping force and the average value.

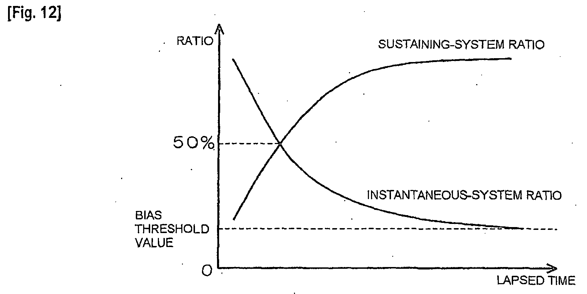

On the other hand, when it is estimated that the sustaining-system ratio is smaller than the determination threshold value based on the output lapsed time, in the same manner as the step 121, the degree of fatigue is decided based on a value of a pedal stepping force which a rider inputs with respect to an operation continuation time (step 151) and, thereafter, processing which complements an assist amount corresponding to an instantaneous-system ratio (bias processing) is performed (step 152). With respect to an assist amount corresponding to an instantaneous-system ratio, by setting a minimum ratio of a sustaining-system ratio of muscle working amount as a bias threshold value (see Fig. 12), a value given as an assist bias amount (=coefficient × (instantaneous-system ratio - threshold value)) is calculated as an assist force necessary in an instantaneous-system. This is because a case often occurs empirically where it is estimated that the instantaneous-system muscle working amount is large when a high load is applied to the bicycle such as a case where the bicycle travels on a steep slope or the sudden acceleration is required so that bias processing which increases an assist amount is performed.

After the degree of fatigue is decided, in the same manner as steps shown in Fig. 7, the recovery of physical strength is confirmed (step 122), stop/restarting history is confirmed (step 123), and the fatigue degree estimation processing is finished (step 124). Processing executed in step 122 and step 123 is equal to the corresponding steps explained in conjunction with Fig. 8 and Fig. 9.

According to the assist drive force control for a motor assisted bicycle described above, different from the technique where an assistance ratio of a drive force is simply changed based on a human body index calculated from the number of heart beats and the number of expirations as described in conjunction with prior art, a basic assist amount is set by calculation based on an operation state (stepping force and vehicle speed) by the assist amount control part 10, a fatigue level of a rider is estimated by the fatigue level estimation part 12, and an assist force is decided by performing the increase/decrease correction of the basic assist amount (decide the assist force by taking into account the degree of fatigue (human body index) with respect to the basic assist amount set by calculation by taking into account the operation state) and hence, it is possible to efficiently impart an assist amount without giving discomfort to the rider.

As a result, the motor can be efficiently driven so that stable traveling distance can be ensured per one-time charging.

The invention is directed to provide an efficient assist by a motor by setting an assist amount based on fatigue information which is actually measured while estimating the degree of fatigue which a rider feels in a motor assisted bicycle.

In a motor assisted bicycle which includes: a stepping force sensor 2 which detects a stepping force generated on a pedal; an assist amount control part 10 which includes an assist amount correction means which performs the estimation of fatigue of a human body and decides an assist force corresponding to an output of the stepping force sensor 2; and a motor 5 which generates the assist force and assists a drive force, the motor assisted bicycle further comprises a vehicle speed sensor 1 which detects a vehicle speed of the vehicle, and the assist amount control part 10 includes: a basic assist amount setting part 11 which sets by calculation a basic assist amount based on the stepping force and the vehicle speed; and a fatigue level estimation part 12 which performs the increase/decrease correction of the basic assist amount by estimating a fatigue level of a rider.

## Claims

1. A motor assisted bicycle comprising: a vehicle speed sensor (1) which detects a vehicle speed of the vehicle; a stepping force sensor (2) which detects a stepping force generated on a pedal; an assist amount control part (10) which includes an assist amount correction means which performs the estimation of fatigue of a human body and decides an assist force corresponding to an output of the stepping force sensor (2); and a motor (5) which generates the assist force and assists a drive force,
**characterized in that**
the assist amount control part (10) comprises:
a basic assist amount setting part (11) which sets by calculation a basic assist amount based on the stepping force and the vehicle speed; and
a fatigue level estimation part (12) which performs the increase/decrease correction of the basic assist amount by estimating a fatigue level of a rider,
wherein the fatigue level estimation part (12)
calculates an operation continuation time based on history of the stepping force or history of the vehicle speed,
estimates that a fatigue level is zero when the operation continuation time is less than a predetermined time being a period of time after which a person in general feels fatigue when he rides a bicycle and steps in pedals at an average speed continuously, and
estimates the fatigue level when the operation continuation time is the predetermined time or more based on a value of pedal stepping force which a rider inputs with respect to the operation continuation time.

2. The motor assisted bicycle according to claim 1, wherein the fatigue level estimation part (12) includes a detection means which detects a measured time, and estimates the fatigue level based on data obtained by the detection means, the stepping force and a vehicle speed.

3. The motor assisted bicycle according to claim 1 or 2, wherein the fatigue level estimation part (12) includes a detection means which detects a stepping force or at least one of a vehicle speed, a myogenic potential of a rider, a heart rate of the rider and an expiration component of the rider, and a fatigue level is estimated by taking into account data obtained by the detection means.

4. The motor assisted bicycle according to claim 3, wherein the fatigue level estimation part (12) detects the number of times the vehicle is stopped or restarted based on history of the stepping force or history of the vehicle speed, and reflects detected data on the fatigue level.

5. The motor assisted bicycle according to any one of claims 1 to 4, wherein the fatigue level estimation part (12) estimates the fatigue recovery based on a vehicle stop time which is detected based on history of the stepping force or history of the vehicle speed, and reflects the fatigue recovery on the fatigue level.

6. The motor assisted bicycle according to any one of claims 1 to 5, wherein the fatigue level estimation part (12) includes a graph showing the relationship of a ratio between an instantaneous-system muscle working amount and a sustaining-system muscle working amount with respect to a period of time within which an output is generated by a rider, and estimates the fatigue level by taking into account a proportion of a ratio of the instantaneous-system muscle working amount.

7. The motor assisted bicycle according to any one of claims 1 to 6, wherein the assist amount control part (10) decides the assist force by feedbacking the stepping force generated in a previous cycle of the rotating pedal.

8. The motor assisted bicycle according to any one of claims 1 to 7, wherein the assist amount control part (10) includes a mode switching means (4) for selecting a threshold value of the stepping force which takes into account the degree of fatigue, and determines the presence or the non-presence of the fatigue level estimation based on each threshold value set in each mode.

## Patentansprüche

1. Motorunterstütztes Fahrrad, umfassend: einen Fahrzeuggeschwindigkeitssensor (1), welcher eine Fahrzeuggeschwindigkeit von dem Fahrzeug erfasst; einen Tretkraftsensor (2), welcher eine auf einem Pedal erzeugte Tretkraft erfasst; einen Unterstützungsbetrag-Steuer-/Regelteil (10), welcher ein Unterstützungsbetrag-Korrekturmittel umfasst, welches die Abschätzung einer Ermüdung eines menschlichen Körpers durchführt und eine Unterstützungskraft entsprechend einer Ausgabe von dem Tretkraftsensor (2) entscheidet; und einen Motor (5), welcher die Unterstützungskraft erzeugt und eine Antriebskraft unterstützt, **dadurch gekennzeichnet, dass**
der Unterstützungsbetrag-Steuer-/Regelteil (10) umfasst:
einen Basisunterstützungsbetrag-Setzteil (11), welcher durch Berechnung einen Basisunterstützungsbetrag basierend auf der Tretkraft und der Fahrzeuggeschwindigkeit setzt; und
einen Ermüdungsniveau-Schätzteil (12), welcher die Zunahme/Abnahme-Korrektur von dem Basisunterstützungsbetrag durch Abschätzen eines Ermüdungsniveaus von einem Fahrer durchführt,
wobei der Ermüdungsniveau-Schätzteil (12)
eine Betriebsfortdauerzeit basierend auf einer Historie von der Tretkraft oder einer Historie von der Fahrzeuggeschwindigkeit berechnet, abschätzt, dass ein Ermüdungsniveau Null ist, wenn die Betriebsfortdauerzeit kürzer als eine vorbestimmte Zeit ist, welche eine Zeitperiode ist, nach der sich eine Person im allgemeinen ermüdet fühlt, wenn sie ein Fahrrad fährt und mit einer durchschnittlichen Geschwindigkeit kontinuierlich in die Pedale tritt, und
das Ermüdungsniveau abschätzt, wenn die Betriebsfortdauerzeit die vorbestimmte Zeit oder mehr ist, basierend auf einem Wert von einer Pedaltretkraft, welche ein Fahrer eingibt, bezüglich der Betriebsfortdauerzeit.

2. Motorunterstütztes Fahrrad nach Anspruch 1, wobei der Ermüdungsniveau-Schätzteil (12) ein Erfassungsmittel umfasst, welches eine gemessene Zeit erfasst, und das Ermüdungsniveau basierend auf Daten abschätzt, welche von dem Erfassungsmittel erhalten werden, der Tretkraft und einer Fahrzeuggeschwindigkeit.

3. Motorunterstütztes Fahrrad nach Anspruch 1 oder 2, wobei der Ermüdungsniveau-Schätzteil (12) ein Erfassungsmittel umfasst, welches eine Tretkraft oder wenigstens eine von einer Fahrzeuggeschwindigkeit, einem myogenen Potenzial von einem Fahrer, einer Herzfrequenz von dem Fahrer und einer Ausatmungskomponente von dem Fahrer erfasst und ein Ermüdungsniveau abgeschätzt wird, indem von dem Erfassungsmittel erhaltene Daten berücksichtigt werden.

4. Motorunterstütztes Fahrrad nach Anspruch 3, wobei der Ermüdungsniveau-Schätzteil (12) erfasst, wie oft das Fahrzeug gestoppt wird oder erneut gestartet wird, basierend auf einer Historie der Tretkraft oder einer Historie der Fahrzeuggeschwindigkeit und erfasste Daten auf das Ermüdungsniveau reflektiert.

5. Motorunterstütztes Fahrrad nach einem der Ansprüche 1 bis 4, wobei der Ermüdungsniveau-Schätzteil (12) die Ermüdungserholung basierend auf einer Fahrzeugstoppzeit abschätzt, welche basierend auf einer Historie der Tretkraft oder einer Historie der Fahrzeuggeschwindigkeit erfasst wird, und die Ermüdungserholung auf das Ermüdungsniveau reflektiert.

6. Motorunterstütztes Fahrrad nach einem der Ansprüche 1 bis 5, wobei der Ermüdungsniveau-Schätzteil (12) eine grafische Darstellung umfasst, welche die Beziehung zeigt von einem Verhältnis zwischen einer Momentan-System-Muskel-Arbeitsmenge und einer Aufrechterhaltung-System-Muskel-Arbeitsmenge bezüglich einer Zeitperiode, innerhalb der eine Ausgabe durch einen Fahrer erzeugt wird, und das Ermüdungsniveau abschätzt, indem ein Anteil von einem Verhältnis von der Momentan-System-Muskel-Arbeitsmenge berücksichtigt wird.

7. Motorunterstütztes Fahrrad nach einem der Ansprüche 1 bis 6, wobei der Unterstützungsbetrag-Steuer-/Regelteil (10) die Unterstützungskraft entscheidet durch Rückkoppeln der in einem vorherigen Zyklus von dem rotierenden Pedal erzeugten Tretkraft.

8. Motorunterstütztes Fahrrad nach einem der Ansprüche 1 bis 7, wobei der Unterstützungsbetrag-Steuer-/Regelteil (10) ein Modus-Umschaltmittel (4) zum Auswählen eines Schwellenwerts von der Tretkraft umfasst, welcher den Ermüdungsgrad berücksichtigt, und das Vorhandensein oder das Nicht-Vorhandensein von der Ermüdungsniveau-Abschätzung basierend auf jedem Schwellenwert bestimmt, welcher in jedem Modus gesetzt ist.

## Revendications

1. Vélo assisté par moteur comprenant : un capteur de vitesse de véhicule (1) qui détecte une vitesse de véhicule du véhicule ; un capteur de force d'appui (2) qui détecte une force d'appui générée sur une pédale ; une partie de commande de quantité d'assistance (10) qui comprend des moyens de correction de quantité d'assistance qui effectuent l'estimation de fatigue d'un corps humain et qui décident d'une force d'assistance correspondant à une sortie du capteur de force d'appui (2) ; et un moteur (5) qui génère la force d'assistance et qui participe à une force d'entraînement,
**caractérisé en ce que**
la partie de commande de quantité d'assistance (10) comprend :
une partie d'établissement de quantité d'assistance de base (11) qui établit par calcul une quantité d'assistance de base sur la base de la force d'appui et de la vitesse de véhicule ; et
une partie d'estimation de niveau de fatigue (12) qui effectue la correction d'augmentation/diminution de la quantité d'assistance de base en estimant un niveau de fatigue d'un cycliste,
dans laquelle la partie d'estimation de niveau de fatigue (12)
calcule un temps de poursuite de fonctionnement sur la base de l'historique de la force d'appui ou de l'historique de la vitesse de véhicule,
estime qu'un niveau de fatigue est nul lorsque le temps de poursuite de fonctionnement est inférieur à un temps prédéterminé qui est une période de temps après laquelle une personne ressent généralement de la fatigue lorsqu'elle se déplace à vélo et appuie sur les pédales à une vitesse moyenne continuellement, et
estime le niveau de fatigue lorsque le temps de poursuite de fonctionnement est le temps prédéterminé ou plus sur la base d'une valeur de force d'appui sur les pédales entrée par un cycliste en ce qui concerne le temps de poursuite de fonctionnement.

2. Vélo assisté par moteur selon la revendication 1, dans lequel la partie d'estimation de niveau de fatigue (12) comprend des moyens de détection qui détectent un temps mesuré, et estime le niveau de fatigue sur la base de données obtenues par les moyens de détection, de la force d'appui et d'une vitesse de véhicule.

3. Vélo assisté par moteur selon la revendication 1 ou 2, dans lequel la partie d'estimation de niveau de fatigue (12) comprend des moyens de détection qui détectent une force d'appui ou au moins l'un d'une vitesse de véhicule, d'un potentiel myogénique d'un cycliste, d'un rythme cardiaque du cycliste et d'une composante d'expiration du cycliste, et un niveau de fatigue est estimé en prenant en compte les données obtenues par les moyens de détection.

4. Vélo assisté par moteur selon la revendication 3, dans lequel la partie d'estimation de niveau de fatigue (12) détecte le nombre de fois que le véhicule est arrêté ou redémarré sur la base de l'historique de la force d'appui ou de l'historique de la vitesse de véhicule, et répercute les données détectées sur le niveau de fatigue.

5. Vélo assisté par moteur selon l'une quelconque des revendications 1 à 4, dans lequel la partie d'estimation de niveau de fatigue (12) estime la récupération de fatigue sur la base d'un temps d'arrêt de véhicule qui est détecté sur la base de l'historique de la force d'appui ou de l'historique de la vitesse de véhicule, et répercute la récupération de fatigue sur le niveau de fatigue.

6. Vélo assisté par moteur selon l'une quelconque des revendications 1 à 5, dans lequel la partie d'estimation de niveau de fatigue (12) comprend un graphe montrant la relation d'un rapport entre une quantité de travail musculaire de système instantané et une quantité de travail musculaire de système soutenu en relation avec une période de temps dans laquelle une sortie est générée par un cycliste, et estime le niveau de fatigue en prenant en compte une proportion d'un rapport de la quantité de travail musculaire de système instantané.

7. Vélo assisté par moteur selon l'une quelconque des revendications 1 à 6, dans lequel la partie de commande de quantité d'assistance (10) décide de la force d'assistance par rétroaction de la force d'appui générée dans un cycle précédent de la pédale en rotation.

8. Vélo assisté par moteur selon l'une quelconque des revendications 1 à 7, dans lequel la partie de commande de quantité d'assistance (10) comprend des moyens de commutation de mode (4) pour sélectionner une valeur de seuil de la force d'appui qui prend en compte le degré de fatigue, et détermine la présence ou l'absence de l'estimation de niveau de fatigue sur la base de chaque valeur de seuil fixée dans chaque mode.
